Europäisches Patentamt

European Patent Office

Office européen des brevets

(19)

(11) Publication number: **0 042 656**
**B1**

## EUROPEAN PATENT SPECIFICATION

(12)

(45) Date of publication of patent specification: **08.08.84**

(51) Int. Cl.³: **B 21 B 1/26**

(21) Application number: **81200867.0**

(22) Date of filing: **02.11.79**

(60) Publication number of the earlier application in accordance with Art. 76 EPC: **0010976**

(54) Heat shield arrangements.

(30) Priority: **07.11.78 GB 4350678**

(43) Date of publication of application:
**30.12.81 Bulletin 81/52**

(45) Publication of the grant of the patent:
**08.08.84 Bulletin 84/32**

(84) Designated Contracting States:
**BE DE FR GB IT NL**

(56) References cited:
**EP - A - 0 005 340**
**GB - A - 1 040 420**
**US - A - 2 177 971**
**US - A - 3 877 867**

(73) Proprietor: **ENCOMECH ENGINEERING SERVICES LIMITED**
**729 London Road**
**Hounslow, TW3 1SE (GB)**

(72) Inventor: **Laws, William Robert**
**19 Tudor Avenue**
**Worcester Park Surrey (GB)**
Inventor: **Reed, Geoffrey Ronald**
**8 Beechdene**
**Tadworth Surrey (GB)**

(74) Representative: **Gura, Henry Alan et al,**
**MEWBURN ELLIS & CO. 2/3 Cursitor Street**
**London EC4A 1BQ (GB)**

EP 0 042 656 B1

Courier Press, Leamington Spa, England.

## Description

This invention relates to heat shield arrangements and is concerned particularly, but not exclusively, with heat shields for use in metal processing plant, such as hot strip mills.

It has previously been proposed in US 2 177 971 to control the temperature of hot metal strip being processed in a rolling mill by providing a heating furnace between successive roll stands of the mill, the furnace enclosing a water-cooled roll table and a tapering inlet guide for the strip preceding the entry to the furnace enclosure.

It has also been previously proposed to conserve the heat of hot steel strip in its passage through a hot rolling mill by providing a shield of heat-insulating panels adjacent the strip (British Patent No. 1 040 420), especially at the delay table of the mill. Although it has also been proposed to arrange such panels so that they are displaceable towards and away from the strip in order to control their shielding effect, it is desirable to arrange that such panels are capable of being positioned as close to the strip as possible in normal operation, so that they exercise a more uniform effect over the width of the strip.

The reduction of the gap between the strip and the panels, is limited, however, by the need to allow for introduction of the strip past the panels and then to allow for deflections and transient displacements of the strip transverse to its travel direction. The panels, if they are to be both efficient and economical will have a relatively thin-walled construction and they are therefore susceptible to damage if struck by the metal strip as it moves along its travel path.

This damage is particularly likely to occur to the upper panels, because the roll table itself offers some protection for the lower panels. European application 0005340 describes an arrangement in which, to protect the upper panels, sensors are provided below the surface of the upper panels but above the usual position of the strip material: these sensors will then detect any lifting of the material and can actuate raising means to lift the upper panels clear of the material.

Particular problems can arise because, although during rolling the main extent of a slab or strip will usually be relatively flat, its ends can be turned-up (i.e. curved upwards or downwards) to a certain degree because of the forces applied to each end portion as it passes unsupported through a set of rolls, and the effective height of the material may be increased thereby to many times the material thickness. This effect is particularly marked when a strip is rolled in a semi-continuous mill having reversing roughing roll stands through which the initial slab is passed forwards and backwards repeatedly to reduce its thickness, but in a continuous mill the leading end of the strip will also be deformed in a similar way.

According to the present invention, in a heat shield arrangement according to the preamble of claim 1, a reinforced frame or plate structure is provided at an entry region of the arrangement to form an increased-height passage for the introduction of a turned-up material, said passage decreasing in height to lead into the region of limited vertical spacing between said upper and lower panels, said structure comprising an upwardly displaceable element that can be raised by the turned-up material against the influence of a hold-down or preloading force whereby to cause the raising of the upper insulating panels away from the material path.

The formation of a turned-up end will therefore not prevent the material being fed into the increased height entry passage, where the relatively robust bar or frame structure is better adapted to resist damage by impact and can offer sufficient resistance to reduce the turn-up of the leading end of the material and so help to minimise the vertical spacing between the upper and lower insulating panels in the following part of the heat shield arrangement.

The bar or frame structure may have little heat-insulating effect, if any, but it will be preferred, particularly if it is required to provide a relatively large maximum height entry, that at least a part of the entry region is composed of upper and lower heat-insulating panels. The vertical distance between these panels may be progressively reduced along the length of the material path towards the main or intermediate region where the upper and lower panels provide only a limited height path for material.

In an arrangement in which the main or intermediate part of the material path has a relatively uniform insulating effect due to the closeness of the upper and lower panels, the benefit of this may be partly lost where the panels must be more widely spaced apart, for example at an increased height entry region. In such cases, to obtain the desired degree of uniformity of heat insulation it may be preferred to provide panels at the sides of the strip travel path, with heating elements disposed on or within at least some of said side panels. In this way it is possible to counteract the greater heat loss from the edges of the material due to the additional surface area, and especially at the ends of the heat shield arrangement where in addition to any increased spacing of the upper and lower panels, the panels may themselves not be close to the heated material temperature.

In any event, the panels are preferably so arranged that they provide an enclosure that substantially completely surround the material path. Alternatively, it may be sufficient to arrange that there is substantially no straight-line path for heat radiation from the strip past the panels transverse to the travel path of the strip.

As a further measure to avoid damage to the insulating panels, protective bumper or fender elements may project from the inner surfaces of said panels towards the material path below and at the sides of the panels and are preferably connected directly to a rigid supporting
structure.

The invention will be described in more detail
by way of example with reference to the accompanying drawings, wherein:

Fig. 1 is a schematic side view of a heat
shield arrangement according to the invention
between successive roll stands in a continuous
rolling mill,

Fig. 2 shows to a larger scale a detail of the
entry end of the heat shield arrangement of Fig.
3,

Fig. 3 is a schematic side view of a heat
shield arrangement according to the invention
between successive roll stands in a semi-continuous rolling mill,

Fig. 4 is a sectional view on the line X—X in
Fig. 3,

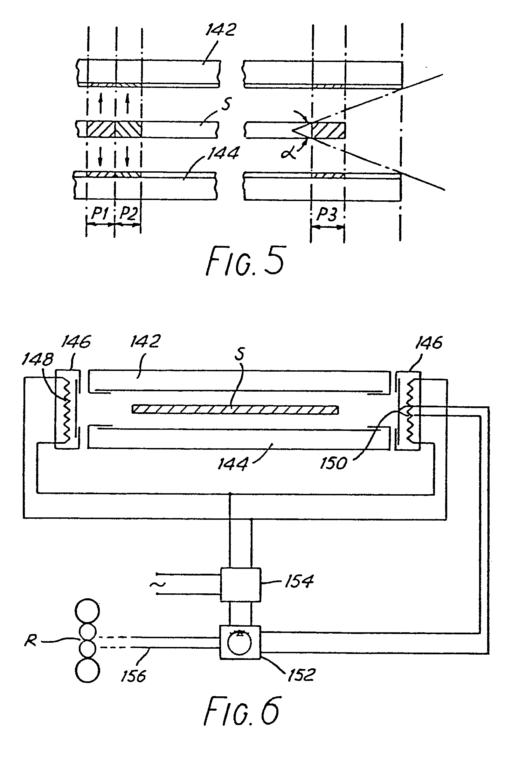

Fig. 5 is a schematic illustration to explain
the manner in which different heat loss rates
occur over the width of a hot strip, and

Fig. 6 is a diagrammatic sectional view of a
heat shield arrangement having side insulating
panels with heating means according to the
invention.

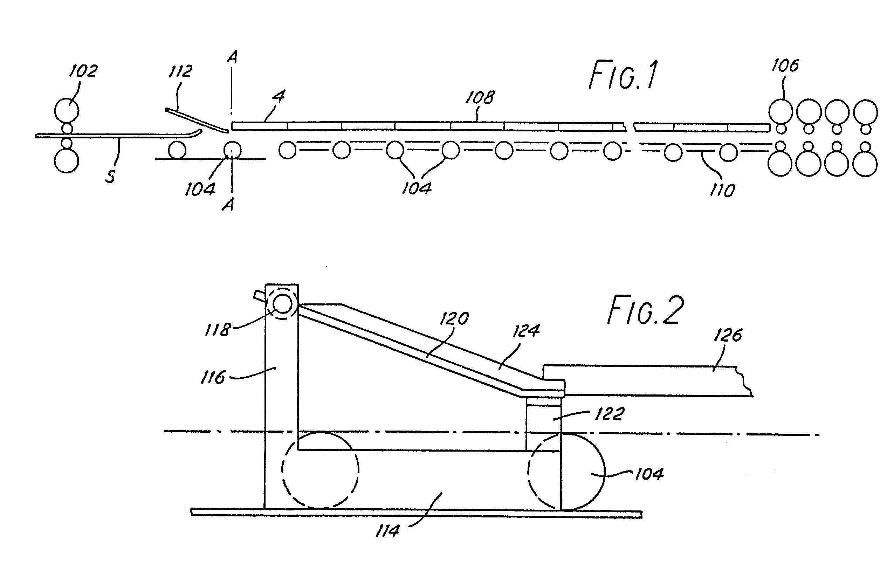

Fig. 1 shows a section through a continuous
rolling mill in which the material being rolled
passes continuously through roughing stands
102, along the roller table 104 to the finishing
stands 106. Along the roller table the material
path is defined between upper and lower series
of heat insulating panels that conserve the heat
in the material and for best effect the gap
between the panels is kept as small as possible.
During rough rolling through the stands 102,
however, it is not uncommon for the nose end
of the slab or strip S to acquire a turn-up or set
so that it is raised from the roller table to such
an extent that it would not be able to enter the
small spacing between the series of upper and
lower panels 108, 110. To overcome this
problem and to ensure that quite large turn-ups
can be accommodated, the arrangement has an
entry region provided with guide means 112
that form an entry passage of increased height.

As Fig. 2 shows in more detail, the guide
means comprise a robust base frame 114 that
is clamped to the side walls of the existing roller
table or is fixed rigidly to the mill foundations.
Vertical members 116 of the frame support a
transverse pivot bar 118 to which the leading
end of a nose entry guide member 120 is
attached. The guide member can thus pivot with
the bar 118 but it normally rests upon adjustable bottom stops 122 at its rear end. The guide
member takes the form of a reinforced frame or
plate structure and includes a central spar 124
that extends under a main bumper bar 126 pro-
jecting below the undersurface of the first panel
of the upper series of panels 108.

The preferred arrangement of the upper and
lower series of panels 108, 110 along the main
extent of the roller table 104 is described in
more detail in our European application 0 010 976, of which this is a divisional application. As is exemplified there, a positive hold-
down force is normally applied to the bumper
bar 126, and the guide member will also
normally remain in its illustrated position under
the combined action of its own weight and the
hold-down force being applied to the bumper
bar. The entering sheet material, if above the
height of the bumper bar, will strike the guide
member and be urged downwards to below the
level of the bumper bar. If the turn-up or
deformation of the entering material is such as
to be able to force the entry guide member
upwards, this will also displace its adjoining
bumper bar and, as previously described, if the
force is sufficient the panel raising mechanism
will be operated. On the other hand, since the
entry member can be of a very robust construction it is possible to arrange that it offers considerable resistance to displacement and
thereby partially corrects any turn-up of the
entry material.

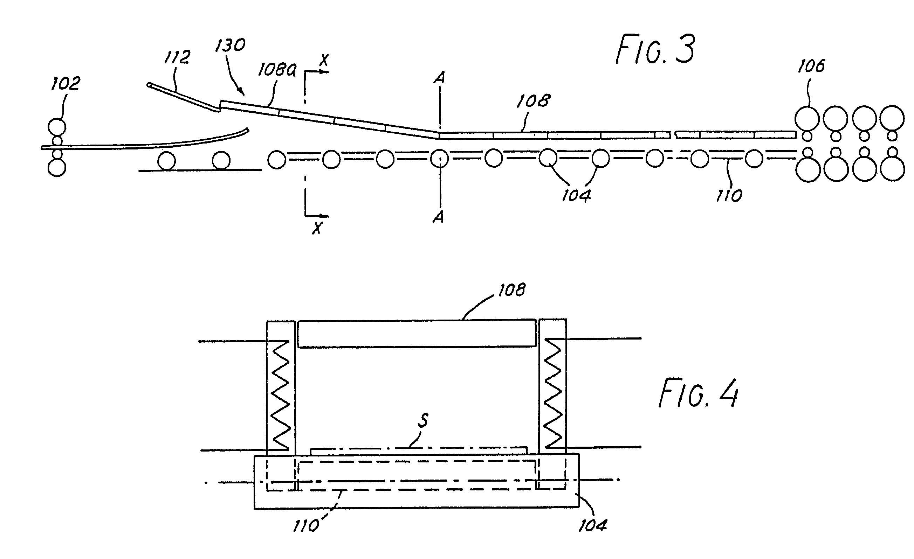

In other types of rolling mill the above-
described entry guide means may not be sufficient. For example, in semi-continuous mills
the material is reduced from slab-form by
consecutive passes backwards and forward
through reversing roughing stands. In this
process there are considerably greater variations in turn-up or lift of the material than in a
continuous rolling process and a much greater
entry height must be permitted. In that case, to
employ entry guide means with little or no heat-
insulating effect, as shown in Figs. 1 and 2, may
make it difficult or impossible to provide an
effective heat shield arrangement and an
arrangement such as is illustrated in Fig. 3 may
be required.

In this arrangement, an increased height
entry section 130 continues over part of the
extent of the heat-insulating panels themselves, and this may occupy up to some 40% of
the length of the roller table 104. The guide
means 112 itself is generally similar to that
already described with reference to Fig. 2, but is
of course disposed at a higher level. As before it
cooperates with the bumper bar associated with
the leading upper panel 108a.

Where it is necessary to have a substantial
vertical spacing between the upper and lower
insulating panels, a further difficulty may arise,
as will now be explained with reference to Fig.
5, which shows in schematic form a part of a
transverse cross-section of a hot strip S as on a
rolling mill delay table between mills, with heat
shield panels 142, 144 above and below the
strip respectively. In the central part of its width
at portions such as P1 and P2 of the strip, most
of the heat radiated from the hot strip will effectively go to heat up portions of corresponding
width of the heat shield panels. Some fall of
temperature will result, to a similar extent for all
such portions in the central region of the strip
width.

At the edges of the strip, however, conditions are no longer uniform. Because a large proportion of the energy radiated from a marginal portion such as the edge width P3 will fall on parts of the heat shield panels which are beyond the width of the strip, this marginal portion of the strip gives up more heat to the panels so that there will be a greater fall in the temperature of the strip at its lateral margins.

This effect will be increased by heat loss to the sides between the top and bottom panels of the shield, where the energy radiated from the strip over an angle $\alpha$ will be directly lost. The direct radiation loss can be reduced by increasing the width of the shield relative to the strip, but then there is a greater energy loss from the hot strip to heat the marginal portions of the heat shields panels that will be particularly marked during start-up.

Fig. 6 illustrates one form of hot strip rolling mill arrangement according to the invention in which in addition to upper and lower heat-insulating panels 142, 144 heat-insulating side panels 146 are mounted at the outer edges of the upper and lower panels to form a heat shield surrounding the path of the hot strip S. It will be clear from the preceding explanation with reference to Fig. 5 that blocking off direct leakage of radiant energy from the edges of the strip in this manner will be advantageous under steady state conditions, but the side panels will themselves act as a heat sink when cold and the situation may only be improved slightly during startup conditions.

To overcome this problem, the side panels are provided with heating means 148, which may be either contained within the panels, immediately behind the inner cover plate as illustrated, or be mounted over the inward face of the panels. In general it will be found that electrical heating elements provide the most convenient method of giving the flexibility of operation that is required, but other forms of heating such as radiant tube gas or oil burners can be used.

Although not shown in detail in the drawings, each of the heat-insulating panels may comprise a thin-walled casing containing a core of one or more layers of heat insulating material.

Temperature sensors 150 are located at convenient intervals along the length of the side panels 146 to monitor the inner surface temperature and the sensor signals are utilised by a controller 152 and voltage regulator 154 to provide a stepped power input to the heating elements of side panels for controlling the surface temperature.

In operation the apparatus may be controlled in the following manner. The desired side panel surface temperatures are first selected on the controller 152 and if the sensed values are below these temperatures the controller actuates the voltage regulator so that a controlled power supply is fed to the heating elements. Instead of relying on voltage regulation the control may operate by on/off switching of the heating elements. An interlock arrangement 156 prevents the heating of the side panels being switched on unless the finished stands R of the mill are ready for production. Once steady state conditions are reached and the control system switches off the side panel heaters, the panels of course continue to function as part of a passive heat shield arrangement. It will be understood that in particular installations it may be required to also have heating means associated with the upper and/or lower panels and these may then be operated in a similar manner.

It will be clear that the provision of such side heating means can be of particular advantage in the heat shield arrangement shown in Fig. 3, where there is a considerable distance between the upper and lower panels in the entry region of the roller table. As indicated by Fig. 4, therefore, the heating means as already described with reference to Fig. 6 can be employed over the increased height entry region. It will be understood that the use of such side heating means can be employed elsewhere in heat shield arrangements according to the invention, and may even be provided along the complete length of the heat shield arrangement if required.

## Claims

1. A heat shield arrangement for a heated length of strip material comprising heat-insulating panels arranged adjacent a travel path for the material and including series of upper and lower panels (108, 110) above and below said path respectively and having a vertical spacing of limited height, characterised in that a reinforced frame or plate structure (112) is provided at an entry region of the arrangement to form an increased-height passage for the introduction of a turned-up material, said passage decreasing in height to lead into the region of limited vertical spacing between said upper and lower panels, said structure comprising an upwardly displaceable element (120) that can be raised by the turned-up material against the influence of a hold-down or preloading force whereby to cause the raising of the upper insulating panels away from the material path.

2. A heat shield arrangement according to claim 1 wherein the raising of said element (120) is arranged to act to raise said panels through sensing means disposed along the extent of said upper panels.

3. A heat shield arrangement according to claim 1 or claim 2 wherein immediately adjacent said structure (112) the upper and lower panels have a greater vertical spacing than said limited vertical spacing.

4. A heat shield arrangement according to claim 3 wherein said entry region is at least partly composed of upper and lower heat insulating panels (108a, 110) the vertical distance between which panels is progressively reduced along the length of the material path towards said region of limited vertical spacing.

5. A heat shield arrangement according to any one of claims 1 to 4 having heat insulating panels (146) at the sides of the material path with heating elements (148) disposed on or within at least some of said panels.

6. A heat shield arrangement according to claim 4 together with claim 5 wherein said heating elements are arranged over at least a part of said entry region (130) having an increased vertical spacing between the upper and lower panels.

7. A heat shield arrangement according to any one of claims 1 to 6 wherein temperature sensors (150) are provided in or adjacent the side panels (146) having heating elements for the control of the power input to said heating elements.

8. A heat shield arrangement according to any one of the preceding claims wherein said upwardly displaceable element (120) at the entry region is pivotable about an axis transverse to the material travel path and at the leading end of said element further from said series of panels.

**Patentansprüche**

1. Hitzeschild für einen erhitzten Längenabschnitt eines Streifenmaterials, bestehend aus wärmeisolierenden Tafeln, die neben einer Bewegungsbahn für das Material angeordnet sind und Reihen oberer und unterer Tafeln (108, 110) über bzw. unter ber Bahn umfassen und einen vertikalen Abstand von begrenzter Höhe aufweisen, dadurch gekennzeichnet, daß eine verstärkte Rahmen—oder Plattenkonstruktion (112) am Eintrittbereich der Anordnung vorgesehen ist, um einen Kanal mit vergrößerter Höhe für die Einführung eines aufwärts gebogenen Materials zu schaffen, wobei die Höhe des Kanals abnimmt, um in den Bereich des begrenzten vertikalen Abstands zwischen den oberen und unteren Tefeln überzugehen, wobei die Konstruktion aus einem nach oben verlagerbaren Element (120) besteht, das entgegen dem Einfluß einer Niederhalte- oder Vorspannkraft von dem nach oben gebogenen Material angehoben werden kann, um dadurch die oberen Isolierungstafeln von der Materialbahn weg anzuheben.

2. Hitzeschild nach Anspruch 1, bei dem das Anheben des Elements (120) das Anheben der Tafeln über Fühlmittel bewirkt, die längs der Erstreckung der oberen Tafeln angeordnet sind.

3. Hitzeschild nach Anspruch 1 oder 2, wobei die der Konstruktion (112) unmittelbar benachbarten oberen und unteren Tafeln einen vertikalen Abstand haben, der größer ist als der besagte begrenzte vertikale Abstand.

4. Hitzeschild nach Anspruch 3, wobei der Eintrittsbereich zumindest teilweise von oberen und unteren wärmeisolierenden Tafeln (108, 110) gebildet ist, deren vertikaler Abstand längs der Materialbahn zu dem Bereich mit dem begrenzten vertikalen Abstand hin fortlaufend abnimmt.

5. Hitzeschild nach einem der Ansprüche 1 bis 4, der Isolationsplatten (146) an den Seiten der Materialbahn aufweist, wobei Heizelemente (148) an oder in mindestens einigen dieser Tafeln angeordnet sind.

6. Hitzeschild nach Anspruch 4 zusammen mit Anspruch 5, wobei die Heizelemente zumindest über einen Teil des Eintrittsbereichs (130) angeordnet sind, der einen vergrößerten vertikalen Abstand zwischen den oberen und unteren Tafeln aufweist.

7. Hitzeschild nach einem der Ansprüche 1 bis 6, wobei Temperaturfühler (150) in oder nahe bei den mit Heizelementen versehenen Seitentafeln (146) angeordnet sind, um die Eingangsleistung dieser Heizelemente zu steuern.

8. Hitzeschild nach einem der vorhergehenden Ansprüche, wobei das nach oben verlagerbare Element (120) am Eintrittsbereich um eine Achse verschwenkbar ist, die sich quer zu der Materialbahn und an dem von der Serie von Tafeln abliegenden vorderen Ende des Elements erstreckt.

**Revendications**

1. Dispositif d'isolation thermique pour une longueur d'une bande de matière chauffée, comprenant des panneaux thermiquement isolants agencés adjacents à un trajet de déplacement de la matière et comprenant une série de panneaux supérieurs et inférieurs (108, 110) respectivement au dessus et en dessous dudit trajet et présentant un espacement vertical d'une hauteur limitée, caractérisé en ce qu'il est prévu une structure renforcée (112) de bâti ou de plaques dans une région d'entrée du dispositif pour former un passage de hauteur accrue pour l'introduction d'une matière relevée, ledit passage ayant une hauteur décroissante pour conduire dans la région à espacement vertical limité entre lesdits panneaux supérieurs et inférieurs, ladite structure comprenant un élément (120) déplaçable vers le haut qui peut être élevé par la matière relevée à l'encontre de l'action d'une force d'abaissement ou de charge préalable afin de provoquer l'élévation des panneaux isolants supérieurs en s'écartant du trajet de la matière.

2. Dispositif d'isolation thermique suivant la revendication 1 dans lequel l'élévation dudit élément (120) est agencée pour agir afin d'elever lesdits panneaux par l'intermédiaire de moyens capteurs disposés suivant la longueur desdits panneaux supérieurs.

3. Dispositif d'isolation thermique suivant la revendication 1 ou la revendication 2 dans lequel les panneaux supérieurs et inférieurs, immédiatement adjacents à ladite structure (112), présentent un espacement vertical limité.

4. Dispositif d'isolation thermique suivant la revendication 3 dans lequel ladite région d'entrée est au moins partiellement composée de panneaux thermiquement isolants supérieurs et inférieurs (108a, 110), la distance verticale entre ces panneaux étant progressivement réduite suivant la longueur du trajet de la matière en direction de ladite région à espacement vertical limité.

5. Dispositif d'isolation thermique suivant l'une quelconque des revendications 1 à 4 comprenant des panneaux thermiquement isolants (146) sur les côtés du trajet de la matière avec des éléments chauffants (148) disposés sur ou dans au moins quelques uns desdits panneaux.

6. Dispositif d'isolation thermique suivant la revendication 4 lorsqu'elle est dépendante de la revendication dans lequel lesdits éléments chauffants sont agencés au dessus d'au moins une partie desdites régions d'entrée (130) ayant un espacement vertical accru entre les panneaux supérieurs et inférieurs.

7. Dispositif d'isolation thermique suivant l'une quelconque des revendications 1 à 6 dans lequel des capteurs (150) de température sont prévus dans ou au voisinage des panneaux latéraux (146) ayant des éléments chauffants pour la commande de la puissance d'entrée auxdits éléments chauffants.

8. Dispositif d'isolation thermique suivant l'une quelconque des revendications précédentes dans lequel ledit élément (120) déplaçable vers le haut dans la région d'entrée est articulé autour d'un axe transversal au trajet de la matière et à l'extrémité avant dudit élément en plus desdites séries de panneaux.

FIG.1

FIG.2

FIG. 3

FIG. 4

0 042 656

*FIG. 5*

*FIG. 6*